# EUROPEAN PATENT SPECIFICATION

(11) **EP 1 895 521 B1**
(45) Date of publication and mention of the grant of the patent: **21.07.2010**
(21) Application number: 07123714.3
(22) Date of filing: 14.04.2005
(51) Int. Cl.: G11B 7/007, G11B 20/12

(54) **Information recording medium, apparatus for recording and/or reproducing data on and/or from information recording medium, method of recording and/or reproducing data on and/or from information recording medium**
Informationsaufzeichnungsmedium, Vorrichtung und Verfahren zur Aufzeichnung und/oder Wiedergabe von Daten auf und/oder von einem Informationsaufzeichnungsmedium
Support d'enregistrement d'informations, appareil pour enregistrer et/ou reproduire des données sur et/ou à partir d'un support d'enregistrement d'informations, procédé d'enregistrement et/ou de reproduction de données sur et/ou à partir d'un support d'enregistrement d'informations

(30) Priority: 17.04.2004 KR 20040026395; 28.04.2004 KR 20040029590; 21.06.2004 KR 20040046050
(43) Date of publication of application: 05.03.2008
(62) Divisional of application: 05252334.7
(73) Proprietor: Samsung Electronics Co., Ltd., Suwon-si, Gyeonggi-do 442-742 (KR)
(72) Inventor: Lee, Kyung-geun, Seongnam-si Gyeonggi-do (KR); Ko, Jung-wan, Suwon-si Gyeonggi-do (KR); Hwang, Wook-yeon, Gyeonggi-do (KR)
(74) Representative: Rooney, John-Paul

(56) References cited:
- EP-A- 1 049 089
- EP-A- 1 128 383
- US-A1- 2002 048 241
- US-A1- 2002 089 919

## Description

The present invention relates to an information recording medium, and more particularly, to an information recording medium having new functions and improved performance compared to existing data storage media and still completely compatible with an existing drive or apparatus for recording data on an information recording medium, a method of recording and/or reproducing data on/from an information recording medium, an apparatus for recording and/or reproducing data on/from an information recording medium, and a computer-readable recording medium, on which a program enabling the method is recorded.

In general, optical data storage media, such as optical discs, are widely used in an optical pickup apparatus which records data on and/or reproduces data from the optical data storage media without physically contacting the optical data storage media. Optical discs are classified into compact discs (CDs) or digital versatile discs (DVDs) according to their storage capacities. Examples of an optical disc on which data can be recorded and from which data can be erased and reproduced include a 650 MB CD-R, a CD-rewritable (RW), a 4.7 GB DVD+R/RW, a DVD-random access memory (RAM), and a DVD-R/RW. Examples of an optical disc from which data can only be reproduced include a 650 MB CD and a 4.7 GB DVD-ROM. Also, the development of high density (HD) DVDs or Blu-ray (BD) discs with a storage capacity of at least 15 GB has been almost accomplished, and the development of super-resolution near-field structure (super RENS) discs or hologram discs with an even higher storage capacity than HD DVDs or BD discs is now under way.

Currently, research has been carried out on the design of recordable DVD standards, which provide newly developed data storage media with perfect compatibility with an existing drive or apparatus for recording data on an information recording medium in terms of data recording and reproducing. In particular, various efforts have been made to develop media technologies that can maintain excellent recording characteristics of the newly developed data storage media even at low recording speed and can enable the newly developed data storage media to be perfectly compatible with an existing drive or apparatus for recording data on an information recording medium. However, since there are various types of discs (e.g., a DVD-RAM, a DVD-RW, and a DVD-R), information indicating whether each of the various types of discs is recordable and/or reproducible should be specified somewhere on a corresponding disc, together with information on the recording speed of the corresponding disc.

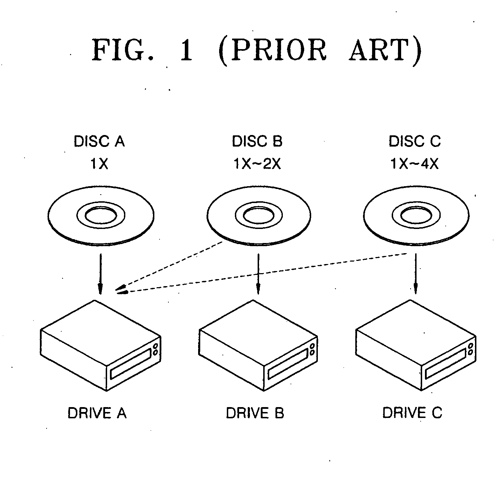

Figure 1 is a diagram illustrating why it is necessary to record compatibility information, specifying whether each area on the information recording medium is recordable and/or reproducible, on each information recording medium. Specifically, Figure 1 illustrates three discs and three drives. Referring to Figure 1, suppose that disc A, which has 1X recording speed and is used in drive A, is a disc of version 1, disc B, which has 1X - 2X recording speed and is used in drive B, is a disc of version 2 developed by adding predetermined functions to the disc of version 1, and disc C, which has 1X - 4X recording speed and is used in drive C, is a disc of version 3 developed by adding other predetermined functions to the disc of version 2. Sometimes, a user having the drive A may have to use a disc of a higher version than the disc A, e.g., the disc B or C. Since the disc B or C supports 1X recording speed, it may be compatible with the drive A theoretically. However, without knowing whether data can be recorded and/or reproduced on and/or from user data areas on discs B or C, it is difficult to record data on or reproduce data from discs B or C.

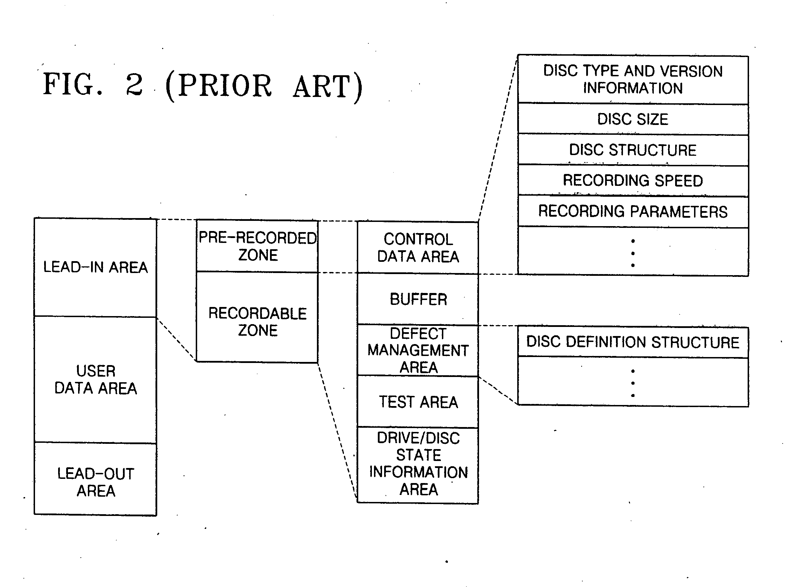

Figure 2 is a diagram illustrating the structure of a conventional disc. Referring to Figure 2, a lead-in area is disposed along the inner circumference of the conventional disc, a lead-out area is disposed along the outer circumference of the conventional disc, and a user data area, in which user data is recorded, is disposed between the lead-in area and the lead-out area.

The lead-in area includes a pre-recorded zone, on which predetermined data has already been written and from which the predetermined data cannot be erased but can only be reproduced, and a recordable zone, on which data can be written or overwritten and from which data can also be erased.

The pre-recorded zone is a control data area, in which control data is recorded. The control data includes information on the type, version, size, recording speed and recording parameters of the conventional disc.

The recordable zone includes a buffer area, a defect management area (DMA), a test zone, and a conventional disc/conventional drive state information area.

The buffer area serves as a buffer between the pre-recorded zone and the recordable zone.

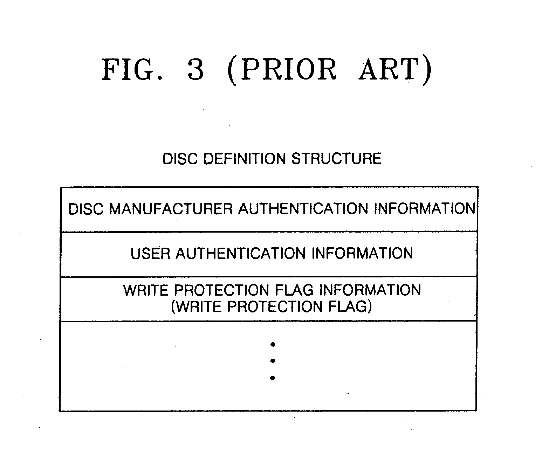

The DMA stores defect information, such as the addresses of replacement data that respectively replace defective data in the user data area. The DMA also stores a conventional disc definition structure (DDS), which is illustrated in Figure 3. Referring to Figure 3, the DDS includes conventional disc manufacturer authentication information, which is used for authenticating a conventional disc manufacturer, user authentication information, which is used for authenticating a conventional disc user, and a write protection flag, which prevents data from being recorded on a conventional disc.

The test area is tested for determining an optimum recording power for recording data in the user data area.

The conventional disc/conventional drive state information area stores information on the state of the conventional disc or a conventional drive.

Korean Patent Publication No. 2000-5588 submitted by the same applicant of the present invention, discloses a method of recording a write protection flag on a disc so that data can be prevented from being recorded on any area on the disc with the exception of a DMA, in which a result of testing a lead-in/lead-out area on the disc with the use of a drive and defect information are recorded. However, the DMA is of great importance because address information of replacement data, replacing defective data in a data area of the disc, is recorded in the DMA. Therefore, there is a need to mark the DMA as recordable and/or reproducible separately from the data area. In addition, it is possible to provide various recording and/or reproducing information areas on the disc by marking each area on the disc as recordable and/or reproducible.

Moreover, if a disc which is based on new disc standards and whose version is yet to be known is installed in a drive or apparatus for recording data on an information recording medium, a user may have difficulty deciding whether to record and/or reproduce data on and/or from the disc because it is difficult to determine whether the disc is recordable and/or reproducible.

US 2002/089919 discloses a recording medium according to the pre-characterising portion of claims 1 and 2 appended hereto.

EP-A-1 049 089 discloses a further recording medium and apparatus.

US2002/048241 discloses yet another recording medium and apparatus.

According to the present invention there is provided an information recording medium and apparatus as set forth in the appended claims. Preferred features of the invention will be apparent from the dependent claims, and the description which follows.

These and/or other aspects and advantages of the present invention will become more apparent and more readily appreciated from the following description of the embodiments, taken in conjunction with the attached drawings of which:
Figure 1 is a diagram illustrating the necessity to record on each information recording medium compatibility information specifying whether each area on the information recording medium is recordable and/or reproducible;
Figure 2 is a diagram illustrating the structure of a conventional disc;
Figure 3 is a diagram illustrating the structure of a DDS of Figure 2;
Figure 4 is a diagram illustrating the structure of a disc according to an embodiment of the present invention;
Figure 5 is a diagram illustrating an example of compatibility information of Figure 4;
Figure 6 is a diagram illustrating another example of the compatibility information of Figure 4;
Figures 7A through 7C are diagrams illustrating information of Figure 6 specifying whether a defect management area (DMA) is recordable and/or reproducible (hereinafter referred to as DMA recordability and/or reproducibility information);
Figure 8 is a table showing whether a drive can record data on a disc according to a write protection flag recorded in a DDS of the disc and compatibility information specifying whether each area on the disc is recordable and/or reproducible;
Figure 9 is a schematic block diagram of an apparatus for recording and/or reproducing data on and/or from an information recording medium, according to an embodiment of the present invention;
Figure 10 is a flowchart of a method of recording compatibility information on an information recording medium, according to an embodiment of the present invention;
Figure 11 is a flowchart of a method of recording data on an information recording medium with reference to compatibility information recorded on the information recording medium, according to an embodiment of the present invention;
Figure 12A is a diagram illustrating the relationship among information (hereinafter referred to as write inhibit hole information) on a write inhibit hole of a cartridge, a write protection flag recorded in a DDS of a disc, and compatibility information of the disc;
Figure 12B is a table showing whether a drive can record data on a disc according to write inhibit hole information, a write protection flag recorded in a DDS of a disc, and compatibility information of the disc; and
Figure 13 is a flowchart of a method of recording data on an information recording medium with reference to compatibility information recorded on the information recording medium, according to another embodiment of the present invention.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

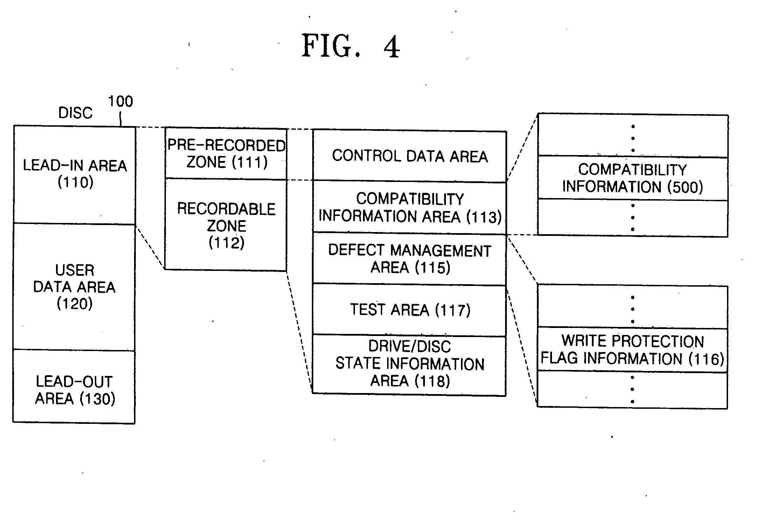

Figure 4 is a diagram illustrating the structure of a disc 100 according to an embodiment of the present invention. Referring to Figure 4, the disc 100 includes a lead-in area 110, a user data area 120, and a lead-out area 130.

The lead-in area 110 includes a pre-recorded zone 111 and a recordable zone 112. The pre-recorded zone 111 is used for storing control data.

The recordable zone 112 includes a compatibility information area 113, a defect management area (DMA) 115, a test area 117, and a disc/drive state information area 118. The DMA 115 includes a disc definition structure (DDS), in which a write protection flag 116 is recorded. The DMA 115, the test area 117, and the disc/drive state information area 118 have already been described above with reference to Figure 2. The disc 110 further includes the compatibility information area 113, compared to the conventional disc of Figure 2.

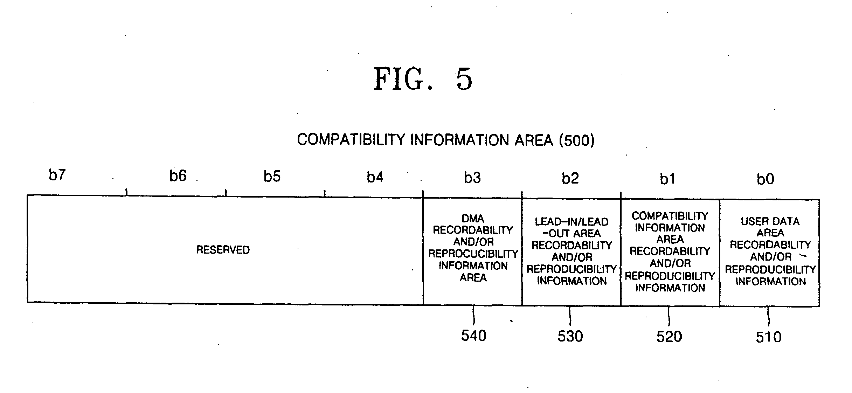

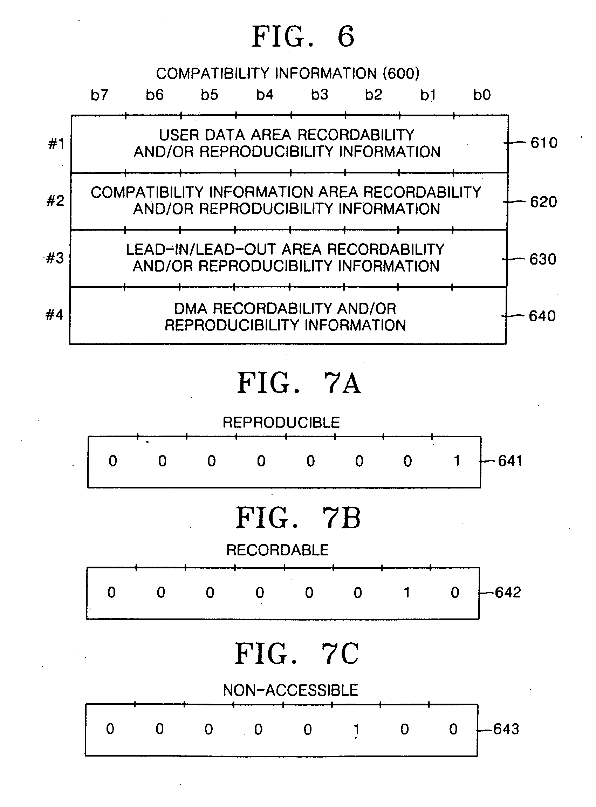

The compatibility information area 113 includes compatibility information 500. The compatibility information 500 may include one byte or a plurality of bytes. An example of the compatibility information 500, which includes one byte, is illustrated in Figure 5, and another example of the compatibility information 500, which includes a plurality of bytes, is illustrated in Figure 6.

Figure 5 is a diagram illustrating an example of the compatibility information 500 of Figure 4. Referring to Figure 5, the compatibility information 500 is formed of one byte, which includes first through eighth bits b0 through b7. The first bit b0 represents information 510 specifying whether the user data area 120 is recordable and/or reproducible (hereinafter referred to as user data area recordability and/or reproducibility information 510). The second bit b1 represents information 520 specifying whether the compatibility information area 113 is recordable and/or reproducible (hereinafter referred to as compatibility information area recordability and/or reproducibility information 520). The third bit b2 represents information 530 specifying whether the lead-in or lead-out area 110 or 130 is recordable and/or reproducible (hereinafter referred to as lead-in/lead-out area recordability and/or reproducibility information 530). Since the compatibility information area recordability and/or reproducibility information 520 and the DMA recordability and/or reproducibility information 540 are separate, the lead-in or lead-out area 110 or 130 does not include the compatibility information area 113 and the DMA 115. The fourth bit b3 represents information 540 specifying whether the DMA 115 is recordable and/or reproducible (hereinafter referred to as DMA recordability and/or reproducibility information 540). The fifth through eighth bits b4 through b7 are reserved for storing information specifying whether other areas on the disc 100 are recordable and/or reproducible.

The recordability and reproducibility of each of the user data area 120, the compatibility information area 113, the lead-in or lead-out area 110 or 130, or the DMA 115 are specified in Table 1.

**Table 1.**

| Compatibility Information | | b7 | b6 | b5 | b4 | b3 | b2 | b1 | b0 |
|---|---|---|---|---|---|---|---|---|---|
| User Data Area | Reproducibility | | | | | | | | 0 |
| | Recordability | | | | | | | | 1 |
| Compatibility Information Area | Reproducibility | | | | | | | 0 | |
| | Recordability | | | | | | | 1 | |
| Lead-in/Lead-out Area | Reproducibility | | | | | | 0 | | |
| | Recordability | | | | | | 1 | | |
| Defect Management Area | Reproducibility | | | | | 0 | | | |
| | Recordability | | | | | 1 | | | |
| | | Reserved | | | | | | | |

In Table 1, if a predetermined bit of compatibility information has a value of "0", a predetermined area is only reproducible. If the predetermined bit of the compatibility information has a value of "1", the predetermined area is recordable.

In Table 1, the fifth through eighth bits b4 through b7 are reserved for purposes other than indicating whether each of the user data area 120, the compatibility information area 113, the lead-in or lead-out area 110 or 130, and the DMA 115 is recordable and/or reproducible.

The compatibility information 500 may be recorded in at least one of the lead-in area 110 or the lead-out area 130. For enhancing the reliability of the compatibility information 500, the compatibility information 500 may be recorded in both the lead-in area 110 and the lead-out area 130.

The user data area 120, the compatibility information area 113, the lead-in or lead-out area 110 or 130, and the DMA 115 are examples of areas on the disc 100 whose state information, specifying whether they are recordable and/or reproducible, can be included in the compatibility information 500. Thus, even if areas, other than the user data area 120, the compatibility information area 113, the lead-in or lead-out area 110 or 130, and the DMA 115, are newly defined on the disc 100 for supporting new functions, the compatibility information 500 may be modified to further include state information specifying whether each of the newly defined areas is recordable and/or reproducible by modifying firmware of a drive, rather than having to modify hardware of the drive. Accordingly, it is possible to ensure a maximum level of compatibility between the disc 100 and an existing drive or apparatus for recording data on an information recording medium.

If an information recording medium includes more than one layer, it is possible to obtain information of each of the layers, even though a pickup accesses only one of the layers at a time, by recording compatibility information specifying whether each area on each of the layers is recordable and/or reproducible in a lead-in or lead-out area on each of the layers.

In addition, the compatibility information 500 can provide an existing drive with at least basic information on whether each area on a disc is recordable and/or reproducible, regardless of whether the disc is of a higher version than the existing drive. Thus, the compatibility information 500 should be given priority over other information associated with recording and/or reproducing data on and/or from the disc. However, under any circumstances, a drive should always be prevented from recording data on a disc that supports different recording speeds from those supported by the drive.

Figure 6 is a diagram illustrating another example of the compatibility information 500 of Figure 4. Referring to Figure 6, compatibility information 600 includes four bytes, which respectively represent user data area recordability and/or reproducibility information 610, compatibility information area recordability and/or reproducibility information 620, lead-in/lead-out area recordability and/or reproducibility information 630, and DMA recordability and/or reproducibility information 640.

Therefore, compatibility information of all areas on the disc 100 can be represented by a plurality of bytes.

Specifically, the compatibility information 600 includes the user data area recordability and/or reproducibility information 610, the compatibility information area recordability and/or reproducibility information 620, the lead-in/lead-out area recordability and/or reproducibility information 630, and the DMA recordability and/or reproducibility information 640. Each of the user data area recordability and/or reproducibility information 610, the compatibility information area recordability and/or reproducibility information 620, the lead-in/lead-out area recordability and/or reproducibility information 630, and the DMA recordability and/or reproducibility information 640 is one byte long and thus can further contain information, other than a corresponding area's state information specifying whether the corresponding area is recordable and/or reproducible.

Figures 7A through 7C are diagrams illustrating the DMA recordability and/or reproducibility information 640. Referring to Figures 7A through 7C, the DMA recordability and/or reproducibility information 640 includes one byte and contains state information specifying whether the DMA 115 is reproducible, whether the DMA 115 is recordable, and whether the DMA 115 is accessible.

Specifically, as illustrated in Figure 7A, if a first bit b0 of the DMA recordability and/or reproducibility information 640 has a value of 1, and second through eighth bits b1 through b7 of the section 641 all have a value of 0, then the DMA recordability and/or reproducibility information 640 indicates that the DMA 115 is reproducible.

As illustrated in Figure 7B, if the second bit b1 of the DMA recordability and/or reproducibility information 640 has a value of 1, and the rest of the DMA recordability and/or reproducibility information 640 have a value of 0, then the DMA recordability and/or reproducibility information 640 indicates that the DMA 115 is recordable.

As illustrated in Figure 7C, if the third bit b2 of the DMA recordability and/or reproducibility information 640 has a value of 1, and the rest of the DMA recordability and/or reproducibility information 640 have a value of 0, then the DMA recordability and/or reproducibility information 640 indicates that the DMA 115 is inaccessible.

Like the DMA recordability and/or reproducibility information 640 of Figures 7A through 7C, the user data area recordability and/or reproducibility information 610, the compatibility information area recordability and/or reproducibility information 620, and the lead-in/lead-out area recordability and/or reproducibility information 630 may contain state information specifying whether their respective areas are reproducible, whether their respective areas are recordable, or whether their respective areas are accessible. In addition, the DMA recordability and/or reproducibility information 640 of Figures 7A through 7C can further include state information, other than those illustrated in Figures 7A through 7C.

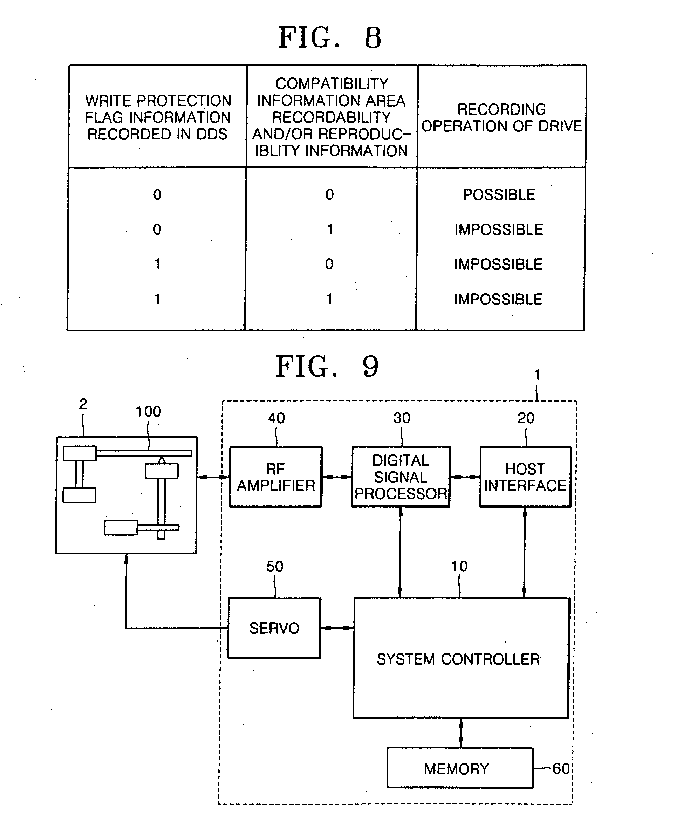

Figure 8 is a table showing whether a drive can record data on a disc according to a write protection flag recorded in a DDS of the disc and compatibility information specifying whether each area on the disc is recordable and/or reproducible. Referring to Figure 8, once a write protection flag is set in the DDS of the disc, it is given priority over the compatibility information. Thus, even if a predetermined bit of the compatibility information indicates that a predetermined area is recordable, data is automatically prevented from being recorded in the predetermined area. Therefore, even when a user accidentally makes the compatibility information contradict the write protection flag, data can be prevented from being recorded in the predetermined area, thus guaranteeing safe use of disc storage.

Referring to Figure 8, if the write protection flag is set in the DDS to have a value of "0", then data can be recorded in the compatibility information area. If the predetermined value of the compatibility information is set to a value of "0", data can be recorded in the predetermined area. Obviously, the write protection flag and the predetermined bit of the compatibility information may be set to a value of "1", other than a value of "0", to indicate that data can be recorded in the predetermined area.

Referring to Figure 8, if the write protection flag and the predetermined bit of the compatibility information are all set to a value of "0", it is determined that a drive can perform a record operation on the predetermined area. Otherwise, it is determined that the drive cannot perform a record operation on the predetermined area. In other words, only if the write protection flag is set to a value of "0", and the predetermined bit of the compatibility information specifies that the predetermined area is recordable, then it is determined that the drive can perform a record operation on the predetermined area. However, if the write protection flag is set to a value of "1", or the predetermined bit of the compatibility information specifies that the predetermined area is not recordable, and then data is prevented from being recorded in the predetermined area.

Figure 9 is a schematic block diagram of an apparatus for recording and/or reproducing data on and/or from an information recording medium, according to an embodiment of the present invention. Referring to Figure 9, the apparatus includes a reading and/or writing unit 2 and a control unit 1.

The reading and/or writing unit 2 includes a pickup and records and/or reproduces data on and/or from a disc 100, which is an example of the information recording medium according to the present invention, using the pickup.

The control unit 1 controls the operation of the reading and/or writing unit 2 based on a predetermined file system. In particular, the control unit 1 controls the reading and/or writing unit 2 to record compatibility information in a lead-in area or lead-out area of the disc 100, which will be described more fully later.

The control unit 1 includes a system controller 10, a host interface 20, a digital signal processor 30, a radiofrequency (RF) amplifier 40, a servo.50, and a memory 60.

When the disc 100 is loaded in the reading and/or writing unit 2, the system controller 10 of the control unit 1 controls the reading and/or writing unit 2 to read the compatibility information from a compatibility information area, which is defined in the lead-in area or lead-out area of the disc 100. Thereafter, the system controller 10 stores the compatibility information in the memory 60. In addition, the system controller 10 also controls the reading and/or writing unit 2 to read a write protection flag from a DDS, which is defined in a DMA of the disc 100, and then stores the write protection flag.

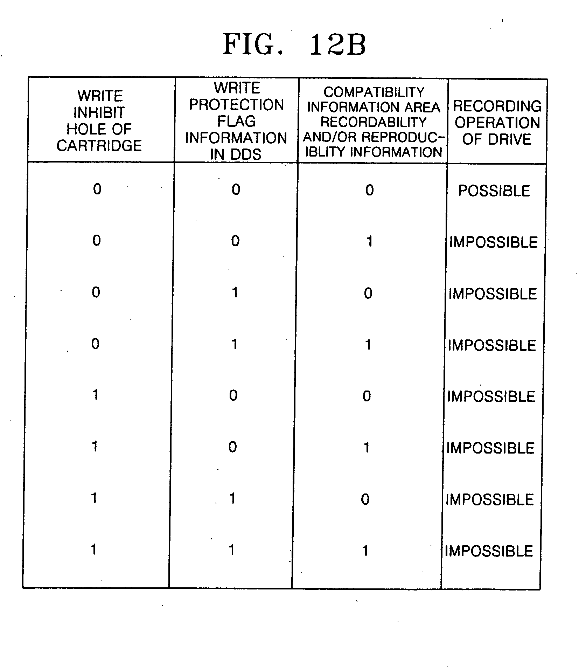

In the case of recording data in a predetermined area on the disc 100, the host interface 20 receives a write command from a host and transmits the received write command to the system controller 10. The system controller 10 determines whether the predetermined area on the disc 100 is recordable, based on the compatibility information and the write protection flag or based on the compatibility information, the write protection flag, and write inhibit hole information of a cartridge. Here, the write inhibit hole information will be described more fully later with reference to Figure 12B.

If at least one of the compatibility information and the write protection flag specifies that the predetermined area is not recordable, the system controller 10 transmits an error message, indicating that data cannot be recorded in the predetermined area, to the host via the host interface 20. However, if both the compatibility information and the write protection flag indicate that the predetermined area is recordable, the system controller 10 controls the digital signal processor 30 and the servo 50 to prepare themselves to execute the write command received from the host via the host interface. The digital signal processor 30 receives data to be recorded from the host interface 20, adds additional data, such as parity, to the data to be recorded, and performs error correction code (ECC) encoding on the addition results, thereby generating an ECC block. Thereafter, the digital signal processor 30 modulates the ECC block in a predetermined manner. Then, the RF amplifier 40 converts data output from the digital signal processor 30 into an RF signal. The reading and/or writing unit 2 receives the RF signal from the RF amplifier 40 and records the received RF signal on the disc 100. The servo 50 receives a servo control command from the system controller 10 and servo-controls the pickup of the reading and/or writing unit 2 by executing the received servo control command.

When reproducing data from the predetermined area on the disc 100, the host interface 20 receives a read command from the host. The system controller 10 performs an initialization operation. In the case of reproducing data from the predetermined area, like in the case of recording data in the predetermined area, the system controller 10 references the compatibility information stored in the memory 60. Thereafter, the system controller 10 determines whether the predetermined area is reproducible based on the compatibility information. If the predetermined area is reproducible, the system controller 10 controls the reading and/or writing unit 2 to read data from the predetermined area. The reading and/or writing unit 2 applies a laser beam to the disc 100, receives a laser beam reflected from the surface of the disc 100, converts the received laser beam into an optical signal, and outputs the optical signal to the RF amplifier 40. The RF amplifier 40 converts the optical signal into an RF signal, obtains modulated data from the RF signal, and provides the digital signal processor 30 with the modulated data. In addition, the RF amplifier 40 also obtains a servo signal from the RF signal and provides the servo 50 with the servo signal. The digital signal processor 30 demodulates the modulated data, performs ECC decoding on the demodulated data, and outputs the ECC-decoded data. The servo 50 receives the servo signal from the RF amplifier 40 and receives a servo control command from the system controller 10. Thereafter, the servo 50 servo-controls the pickup of the reading and/or writing unit 2 based on the servo signal and the servo control command. The host interface 20 transmits the ECC-decoded data received from the digital signal processor 30 to the host.

However, if the predetermined area is not reproducible, the system controller 10 transmits an error message, indicating that the predetermined area is not reproducible, to the host via the host interface 20.

The apparatus of Figure 9, into which an apparatus for recording data on an information recording medium and an apparatus for reproducing data from an information recording medium are integrated, can be divided into two separate apparatuses, i.e., an apparatus for recording data on an information recording medium and an apparatus for reproducing data from an information recording medium.

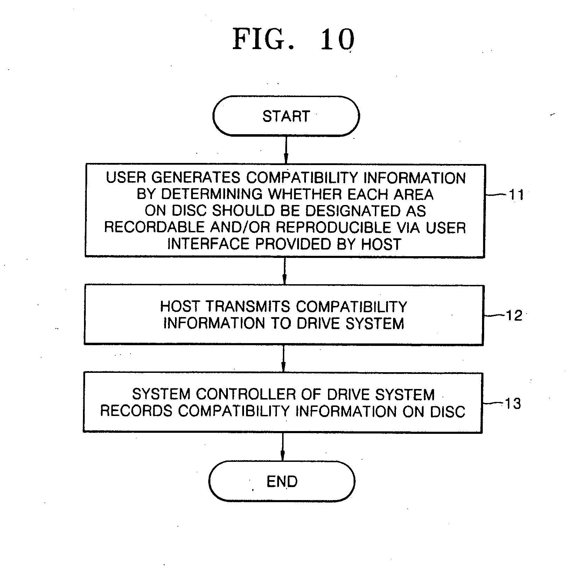

Figure 10 is a flowchart of a method of recording compatibility information on an information recording medium, according to an embodiment of the present invention. Referring to Figure 10, in operation 11, a user generates compatibility information, using a host interface provided by a host, by determining whether each area on a disc should be designated as recordable and/or reproducible. For example, the user may determine whether a user data area, a lead-in or lead-out area, a DMA, and a compatibility information area should be designated as recordable and/or reproducible. In addition, if the disc is yet to be used, the user can generate compatibility information and then record the compatibility information on the disc. If compatibility information has already been recorded on the disc, the user can modify the compatibility information later on.

In operation 12, the host transmits the compatibility information generated by the user to a drive system.

In operation 13, a system controller of the drive system controls the compatibility information to be recorded in a compatibility information area on the disc. For example, the system controller may control the compatibility information to be recorded in a recordable portion of the lead-in area.

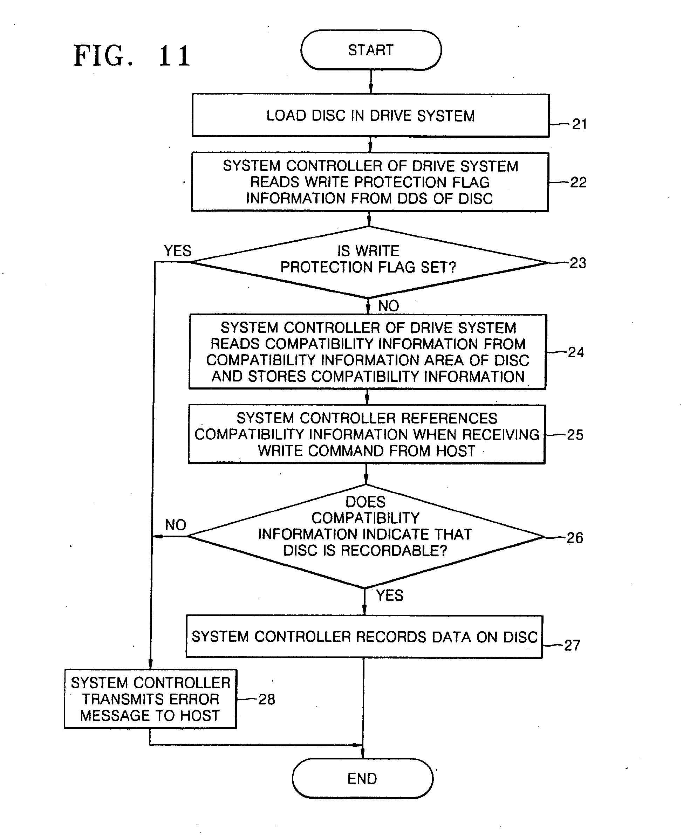

Figure 11 is a flowchart of a method of recording data on an information recording medium with reference to compatibility information recorded on the information recording medium, according to an embodiment of the present invention. Referring to Figure 11, in operation 21, a disc is loaded in a drive system.

In operation 22, a system controller of the drive system reads a write protection flag from a DDS of a DMA on the disc.

In operation 23, the system controller determines whether the write protection flag is set. If the write protection flag is set, the method proceeds to operation 28 because, when set, the write protection flag prevents data from being recorded in a user data area on the disc.

In operation 24, if the write protection flag is yet to be set, the system controller reads compatibility information from a compatibility information area defined in a lead-in or lead-out area of the disc and stores the compatibility information in a memory.

In operation 25, if the drive system receives a write command from a host, the system controller references the compatibility information stored in the memory 60.

In operation 26, the system controller determines whether it can execute the write command on the user data area, based on the compatibility information. In other words, the system controller determines whether data can be recorded in the user data area based on the compatibility information.

In operation 27, if the system controller determines that it can execute the write command on the user data area, based on the compatibility information, the system controller performs a record operation on the user data area. In other words, if the compatibility information indicates that the user data area is recordable, the system controller controls a reading and/or writing unit of the drive system to record data in the user data area.

However, if the user data area is not recordable, the system controller transmits an error message, indicating that the user data area is not recordable, to the host in operation 28. In other words, in operation 28, if the compatibility information indicates that the user data area is not recordable, the system controller 10 transmits the error message to the host.

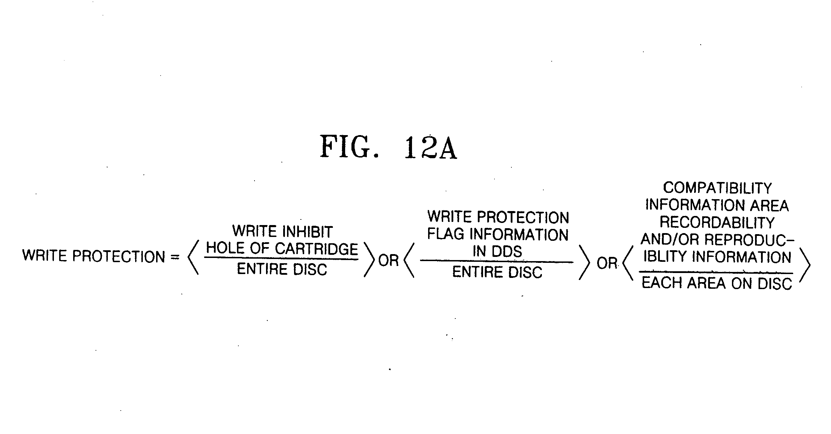

A method of determining whether data can be recorded on a disc based on a write protection flag of a DDS of the disc, compatibility information recorded in a compatibility information area of the disc, and write inhibit hole information of a cartridge of the disc will now be described more fully with reference to Figures 12A through 13.

Figure 12A is a diagram illustrating the relationship among information on a write inhibit hole of a cartridge - (hereinafter referred to as write inhibit hole information), a write protection flag recorded in a DDS of a disc, and compatibility information of the disc. Referring to Figure 12A, an OR operation is performed on the write inhibit hole information, the write protection flag recorded in the DDS of the disc, and the compatibility information of the disc, and then it is determined whether data is prevented from being recorded on the disc based on the OR operation results.

The write inhibit hole is formed in the cartridge which protects a disc loaded therein. If the write inhibit hole is open, the disc is write-protected so that data cannot be recorded thereon. If the write inhibit hole is closed, data can be recorded on the disc. In other words, the write inhibit hole information specifies whether the write inhibit hole is open or closed. A user can open or shut the write inhibit hole. Therefore, if the user desires to prevent data from being recorded on the disc, he/she can open the write inhibit hole. Then, when the disc is loaded in a drive system, the drive system cannot record data on the disc. If the user desires the disc to be recordable, he/she can shut the write inhibit hole. Then, when the disc is loaded in the drive system, the drive system can record data on the disc.

As described above, the write protection flag of the DDS of the disc also specifies whether the disc is write-protected.

In one aspect of the present invention, if at least one of the write inhibit hole information, the write protection flag recorded in the DDS of the disc, or the compatibility information of the disc indicates that the disc is write-protected, data is prevented from being recorded on the disc. However, the write inhibit hole of the cartridge and the write protection flag recorded in the DDS of the disc are all used for preventing data from being recorded on the entire disc. Thus, if either the write inhibit hole information or the write protection flag indicates that the disc is write-protected, data is prevented from being recorded on the entire disc, regardless of the compatibility information. However, if both the write inhibit hole information and the write protection flag allow data to be recorded on the disc, then it is determined whether to record data on each area on the disc, based on corresponding compatibility information.

Therefore, as long as the write inhibit hole information or the write protection flag is set so that the entire disc can be write-protected, data is prevented from being recorded on any area on the disc, regardless of whether the compatibility information designates a corresponding area on the disc as recordable. Therefore, even when a user accidentally makes the write protection flag, the write inhibit hole information, and the compatibility information contradict one another, data can be prevented from being recorded on the disc.

Figure 12B is a table showing whether a drive can record data on a disc according to write inhibit hole information, a write protection flag recorded in a DDS of a disc, and compatibility information of the disc. Referring to Figure 12B, if the write inhibit hole information has a value of "0", a write inhibit hole of a cartridge is closed and the disc is yet to be write-protected. If the write protection flag has a value of "0", a write protection flag is yet to be set so that data still can be recorded on the disc. If a predetermined bit of the compatibility information has a value of "0", a predetermined area on the disc is recordable. Obviously, the write inhibit hole information, the write protection flag, and the predetermined bit of the compatibility information may have a value oft "1" to indicate that data still can be recorded on the disc or in the predetermined area on the disc.

Referring to Figure 12B, it is determined whether the disc is recordable based on a result of performing an OR operation on the write inhibit hole information, the write protection flag, and the compatibility information. Thus, only if the write inhibit hole information, the write protection flag, and the compatibility information are all set to a value of "0", the disc is considered recordable so a drive can record data on the disc. Otherwise, the disc is considered not recordable. In other words, data can be recorded in the predetermined area of the disc only when the write inhibit hole information and the write protection flag are all set to a value of "0", and the compatibility information also designates the predetermined area as recordable. Obviously, although the write inhibit hole information and the write protection flag are all set to a value of "0", data cannot be recorded in the predetermined area on the disc unless the compatibility information designates the predetermined area as not recordable. In addition, if either the write inhibit hole information or the write protection flag is set to a value of "1", data is prevented from being recorded on the entire disc, regardless of the compatibility information.

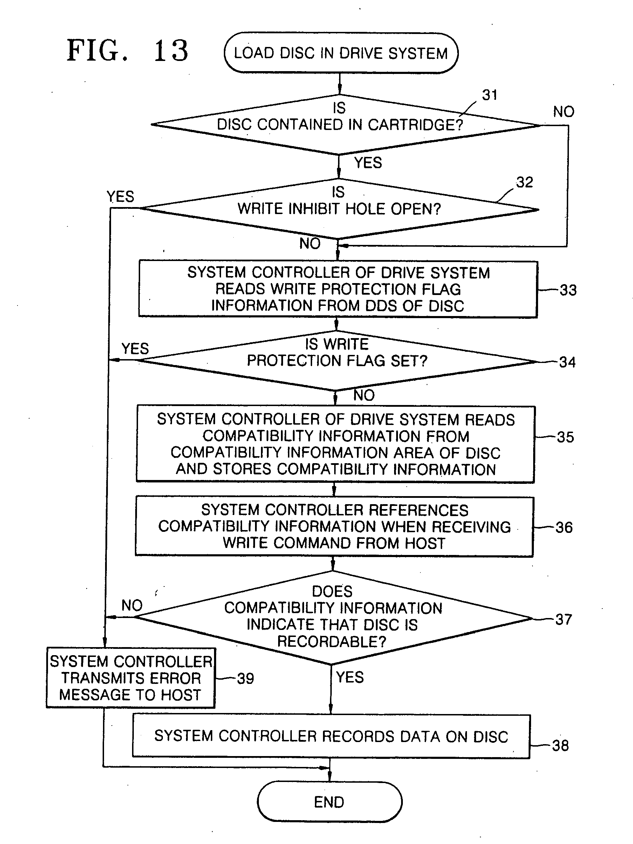

Figure 13 is a flowchart of a method of recording data on an information recording medium with reference to compatibility information recorded on the information recording medium, according to another embodiment of the present invention. Referring to Figure 13, in operation 31, when a disc is loaded in a drive system, the drive system determines whether the disc is contained in a cartridge. If the disc is contained in a cartridge, the method proceeds to operation 33.

In operation 32, if the disc includes a cartridge, the drive system determines whether a write inhibit hole formed at the cartridge is open or closed.

If the write inhibit hole is open, the method proceeds to operation 39, because when open, the write inhibit hole serves to write-protect the disc. In operation 39, a system controller of the drive system transmits an error message to a host.

However, if the write inhibit hole is closed, the method proceeds to operation 33 because when closed, the write inhibit hole allows data to be recorded on the disc. In operation 33, the system controller reads a write protection flag from a DDS in a DMA of the disc.

In operation 34, the system controller determines whether the write protection flag is set. If the write protection flag is set so that data is prevented from being recorded on the disc, the method proceeds to operation 39. In operation 39, the system controller transmits an error message to the host, and then the method is complete.

In operation 35, if the write protection flag is yet to be set so that data still can be recorded on the disc, the system controller reads compatibility information from a compatibility information defined in a lead-in or lead-out area of the disc and stores the compatibility information in a memory.

In operation 36, when the drive system receives a write command from the host, the system controller references the compatibility information stored in the memory.

In operation 37, the system controller determines whether it can execute the write command on the disc based on the compatibility information. For example, when the drive system receives a command to record data in a user data area of the disc from the host, the system controller determines whether data can be recorded in the user data area based on the compatibility information.

In operation 38, if the disc turns out to be recordable, the system controller records data on the disc. In other words, if the compatibility information designates the user data area as recordable, the system controller controls a reading and/or writing unit of the drive system to record data in the user data area.

In operation 39, if the disc turns out to be not recordable, the system controller transmits an error message to the host. In other words, if the compatibility information designates the user data area as reproducible only, the system controller transmits an error message, indicating that the user data area is not recordable, to the host.

The write command is illustrated in Figure 13 as being received by the drive system in operation 36. However, the write command can be received by the drive system in any operation. In addition, the write inhibit hole information, the write protection flag, and the compatibility information are illustrated in Figure 13 as being sequentially checked. However, since the order in which the write inhibit hole information, the write protection flag, and the compatibility information are checked is not important, they can be checked in various orders. What is important in the present invention is a result of performing an OR operation on the write inhibit hole information, the write protection flag, and the compatibility information.

The method of recording and/or reproducing data on and/or from an information recording medium, according to the present invention, may be configured as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion. Also, functional programs, codes, and code segments for configuring the processing methods can be easily construed by programmers skilled in the art to which the present invention pertains.

As described above, the information recording medium according to the present invention can be completely compatible with an information recording medium, a drive, or an apparatus for recording data on an information recording medium based on a different standard from its own. Therefore, even though an information recording medium is loaded in a drive that is of a lower version than the information recording medium, the drive can smoothly record and/or reproduce data on and/or from the information recording medium with reference to compatibility information read from the information recording medium.

Although a few preferred embodiments have been shown and described, it will be appreciated by those skilled in the art that various changes and modifications might be made without departing from the scope of the invention, as defined in the appended claims.

## Claims

1. An information recording medium contained in a cartridge and made according to a second disc standard, the second disc standard being different from a first disc standard, the medium **characterised by**:
a compatibility information area (113) to store compatibility information (500,600), which specifies for each of a plurality of areas on the information recording medium whether the respective area is recordable and/or reproducible according to the first disc standard;
wherein the compatibility information (500,600) is an information useable by a first drive configured according to the first disc standard such that the first drive, when using said compatibility information, is enabled to record and/or reproduce data according to the first disc standard on/from the information recording medium made according to the second disc standard; and
wherein the medium provides write protection information through the compatibility information and other write protection means arranged in the information storage medium, and each of the plurality of areas of the information recording medium is write protected in a case that at least one of the compatibility information and write inhibit hole information on the cartridge in which the information recording medium is contained indicates that recording data on the information recording medium is prohibited.

2. An apparatus recording and/or reproducing data on and/or from an information recording medium contained in a cartridge and made according to a second disc standard, the apparatus being configured for recording/reproducing data according to a first disc standard, the second disc standard being different from the first disc standard, the recording medium comprising a compatibility information area (113) to store compatibility information (500,600), which specifies for each of a plurality of areas on the information recording medium whether the respective area is recordable and/or reproducible according to the first disc standard, wherein the compatibility information is an information useable by a first drive configured according to the first disc standard such that the first drive, when using said compatibility information, is enabled to record and/or reproduce data according to the first disc standard on/from the information recording medium made according to the second disc standard, **characterised in that** the apparatus comprises:
a reading and/or writing unit (2), which reads the compatibility information, which specifies whether for each of the plurality of areas on the information recording medium whether the respective area is recordable and/or reproducible according to the first disc standard; and
a control unit (1), which controls the reading and/or writing unit (2) to write and/or read according to a first disc standard the data on and/or from at least one of the plurality of areas of the information recording medium with reference to the compatibility information;
wherein the control unit (1) is arranged to determine that the information recording medium is write protected in a case at least one of the compatibility information and write inhibit hole information on the cartridge in which the information recording medium is contained and indicates that recording data on the information recording medium is prohibited.

3. The information recording medium of claim 1, wherein the each of the plurality of areas of the information recording medium is write protected further based on other write protection means arranged in the information recording medium.

4. The apparatus for recording and/or reproducing of claim 2, wherein the control unit (1), determines that each of the plurality of areas of the information recording medium is write protected, further based on other write protection means arranged in the information recording medium.

5. A method for recording and/or reproducing data with respect to an information recording medium contained in a cartridge and made according to a second disc standard, the second disc standard being different from a first disc standard, the medium **characterised by** comprising a compatibility information area (113) to store compatibility information (500,600), which specifies for each of a plurality of areas on the information recording medium whether the respective area is recordable and/or reproducible according to the first disc standard wherein the compatibility information (500,600) is an information useable by a first drive configured according to the first disc standard such that the first drive, when using said compatibility information, is enabled to record and/or reproduce data according to the first disc standard on/from the information recording medium made according to the second disc standard; and
the method **characterised by**:
reading the compatibility information from the compatibility information area in the information recording medium; and
determining that each of the plurality of areas of the information recording medium is write protected in a case at least one of the compatibility information and write inhibit hole information on the cartridge in which the information recording medium is contained indicates that recording data on the information recording medium is prohibited.

6. The method for recording and/or reproducing of claim 5, wherein each of the plurality of areas of the information recording medium is write protected, further based on other write protection means arranged in the information recording medium.

## Patentansprüche

1. Informationsaufzeichnungsmedium, das i n einer Kassette enthalten ist und gemäß einem zweiten Disk-Standard hergestellt ist, wobei der zweite Disk-Standard von einem ersten Disk-Standard verschieden ist, wobei das Medium durch Folgendes **gekennzeichnet** ist:
einen Kompatibilitätsinformationsbereich (113) zum Speichern von Kompatibilitätsinformationen (500, 600), die für jeden von mehreren Bereichen auf dem Informationsaufzeichnungsmedium spezifizieren, ob der jeweilige Bereich gemäß dem ersten Disk-Standard beschreibbar und/oder wiedergebbar ist;
wobei die Kompatibilitätsinformationen (500, 600) Informationen sind, die von einem gemäß dem ersten Disk-Standard konfigurierten ersten Laufwerk benutzbar sind, so dass das erste Laufwerk, wenn es die Kompatibilitätsinformationen benutzt, befähigt wird, Daten gemäß dem ersten Disk-Standard auf/aus dem gemäß dem zweiten DiskStandard hergestellten Informationsaufzeichnungsmedium aufzuzeichnen und/oder wiederzugeben; und
wobei das Medium Schreibschutzinformationen durch die Kompatibilitätsinformationen und andere in dem Informations speicher medium angeordnete Schreibschutzmittel gewährleistet und jeder der mehreren Bereiche des Informationsaufzeichnungsmediums schreibgeschützt ist, falls die Kompatibilitätsinformationen und/oder Schreibsperrlochinformationen auf der Kassette , in der das Informationsaufzeichnungsmedium enthalten ist, angeben, dass das Aufzeichnen von Daten auf dem Informationsaufzeichnungsmedium verboten ist.

2. Vorrichtung zum Aufzeichnen und/oder Wiedergeben von Daten auf und/oder aus einem Informationsaufzeichnungsmedium, das i n einer Kassette enthalten ist und gemäß einem zweiten Disk-Standard hergestellt ist , wobei die Vorrichtung dafür ausgelegt ist, Daten gemäß einem ersten Disk-Standard aufzuzeichnen/wiederzugeben, wobei der zweite Disk-Standard von dem ersten Disk-Standard verschieden ist, wobei das Aufzeichnungsmedium einen Kompatibilitätsinformationsbereich (113) zum Speichern von Kompatibilitätsinformationen (500, 600) umfasst, die für jeden von mehreren Bereichen auf de m Informationsaufzeichnungsmedium spezifizieren, ob der jeweilige Bereich gemäß dem ersten Disk-Standard beschreibbar und/oder wiedergebbar ist, wobei die Kompatibilitätsinformationen Informationen sind, die von einem gemäß dem ersten Disk-Standard konfigurierten ersten Laufwerk benutzbar sind, so dass das erste Laufwerk, wenn es die Kompatibilitätsinformationen benutzt, befähigt wird, Daten gemäß dem ersten Disk-Standard auf/aus dem gemäß dem zweiten Disk-Standard hergestellten Informationsaufzeichnungsmedium aufzuzeichnen und/oder wiederzugeben, **dadurch gekennzeichnet, dass** die Vorrichtung Folgendes umfasst:
eine Lese- und/oder Schreibeinheit (2), die die Kompatibilitätsinformationen liest, die für jeden der mehreren Bereiche auf dem Informationsaufzeichnungsmedium spezifizieren, ob der jeweilige Bereich gemäß dem ersten Disk-Standard beschreibbar und/oder wiedergebbar ist; und
eine Steuereinheit (1), die unter Bezugnahme auf die Kompatibilitätsinformationen die Lese- und/oder Schreibeinheit (2) steuert, um die Daten gemäß einem ersten Disk-Standard auf und/oder aus mindestens einem de r mehreren Bereiche des Informationsaufzeichnungsmediums zu schreiben und/oder zu lesen;
wobei die Steuereinheit (1) dafür ausgelegt ist, zubestimmen, dass das Informationsaufzeichnungsmedium schreibgeschützt i s t , falls di e Kompatibilitätsinformationen und/oder Schreibsperrlochinformationen auf der Kassette, in der das Informationsaufzeichnungsmedium enthalten ist, angeben, dass das Aufzeichnen von Daten auf dem Informationsaufzeichnungsmedium verboten ist.

3. Informationsaufzeichnungsmedium nach Anspruch 1, wobei jeder de r mehreren Bereiche des Informationsaufzeichnungsmediums ferner auf der Basis an derer in dem Informations auf zeichnungsmedium angeordneter Schreibschutzmittel schreibgeschützt wird.

4. Vorrichtung zum Aufzeichnen und/oder Wiedergeben nach Anspruch 2, wobei die Steuereinheit (1) ferner auf der Basis anderer in dem Informations auf zeichnungs medium angeordneter Schreibschutzmittel bestimmt, dass jeder der mehreren Bereiche des Informationsaufzeichnungsmediums schreibgeschützt ist.

5. Verfahren zum Aufzeichnen und/oder Wiedergeben von Daten mit Bezug auf ein Informationsaufzeichnungsmedium, das in einer Kassette enthalten ist und gemäß einem zweiten Disk-Standard hergestellt ist, wobei der zweite Disk-Standard von einem ersten Disk-Standard verschieden ist, wobei da s Medium **dadurch gekennzeichnet ist, dass** es einen Kompatibilitätsinformationsbereich (113) zum Speichern von Kompatibilitätsinformationen (500, 600) umfasst, die für jeden von mehreren Bereichen auf dem Informationsaufzeichnungsmedium spezifizieren, ob der jeweilige Bereich gemäß dem ersten Disk-Standard beschreibbar und/oder wiedergebbar ist , wo bei die Kompatibilitätsinformationen (500 , 600) Informationen sind, die von einem gemäß dem ersten Disk-Standard konfigurierten ersten Laufwerk benutzbar sind, so dass das erste Laufwerk, wenn es die Kompatibilitätsinformationen benutzt, befähigt wird, Daten gemäß dem ersten Disk-Standard auf/aus dem gemäß dem zweiten DiskStandard hergestellten Informationsaufzeichnungsmedium aufzuzeichnen und/oder wiederzugeben; und
wobei das Verfahren durch Folgendes **gekennzeichnet** ist:
Lesen der Kompatibilitätsinformationen au s dem Kompatibilitätsinformationsbereich in dem Informationsaufzeichnungsmedium; und
Bestimmen, dass jeder der mehreren Bereiche des Informationsaufzeichnungsmediums schreibgeschützt ist, falls die Kompatibilitätsinformationen und/oder Schreibsperrlochinformationen au f der Kassette, in der das Informationsaufzeichnungsmedium enthalten ist, angeben, dass das Aufzeichnen von Daten auf dem Informationsaufzeichnungsmedium verboten ist.

6. Verfahren zum Aufzeichnen und/oder Wiedergeben nach Anspruch 5, wobei jeder der mehreren Bereiche des Informationsaufzeichnungsmediums ferner auf der Basis anderer in dem Informationsaufzeichnungsmedium angeordneter Schreibschutzmittel schreibgeschützt wird.

## Revendications

1. Support d'enregistrement d'informations contenu dans une cartouche et réalisé conformément à une seconde norme de disque, la seconde norme de disque étant différente d'une première norme de disque, le support étant **caractérisé par** :
une zone d'informations de compatibilité (113) destinée à stocker des informations de compatibilité (500, 600), qui spécifient, pour chacune d'une pluralité de zones sur le support d'enregistrement d'informations, si la zone respective est enregistrable et/ou reproductible conformément à la première norme de disque ;
dans lequel les informations de compatibilité (500, 600) sont des informations utilisables par un premier lecteur configuré conformément à la première norme de disque de telle façon que le premier lecteur, lorsqu'il utilise lesdites informations de compatibilité, soit autorisé à enregistrer et/ou reproduire des données selon la première norme de disque sur/à partir du support d'enregistrement d'informations réalisé conformément à la seconde norme de disque ; et
dans lequel le support fournit des informations de protection contre l'écriture par l'intermédiaire des informations de compatibilité et d'un autre moyen de protection contre l'écriture prévu sur le support de stockage d'informations, et chacune de la pluralité de zones du support d'enregistrement d'informations est protégée contre l'écriture dans le ca s où les informations de compatibilité et/ou les informations de trou d'inhibition d'écriture sur la cartouche dans laquelle est contenu le support d'enregistrement d'informations indiquent que l'enregistrement de données sur le support d'enregistrement d'informations est interdit.

2. Appareil d'enregistrement et/ou de reproduction de données sur et/ou à partir d'un support d'enregistrement d'informations contenu dans une cartouche et réalisé conformément à une seconde norme d e disque, l'appareil étant configuré pour enregistrer/reproduire des données conformément à une première norme de disque, la seconde norme de disque étant différente de la première norme de disque, le support d'enregistrement comprenant une zone d'informations de compatibilité (113) destinée à stocker des informations de compatibilité (500, 600) qui spécifient, pour chacune d'une pluralité de zones sur le support d'enregistrement d'informations, si la zone respective est enregistrable et/ou reproductible conformément à la première norme de disque, dans lequel les informations de compatibilité sont des informations utilisables par un premier lecteur configuré conformément à la première norme de disque de telle façon qu e le premier lecteur, lorsqu'il utilise lesdites informations de compatibilité, ait l'autorisation d'enregistrer et/ou de reproduire des données conformément à la première norme de disque sur/à partir du support d'enregistrement d'informations réalisé conformément à la seconde norme de disque, **caractérisé en ce que** l'appareil comprend :
une unité de lecture et/ou d'écriture (2) qui lit les informations de compatibilité spécifiant, pour chacune de la pluralité de zones sur le support d'enregistrement d'informations, si la zone respective est enregistrable et/ou reproductible conformément à la première norme de disque ; et
une unité de commande (1) qui commande l'unité de lecture et/ou d'écriture (2) afin d'écrire et/ou de lire conformément à une première norme de disque les données sur et/ou à partir d'au moins une de la pluralité de zones du support d'enregistrement d'informations en référence aux informations de compatibilité ;
dans lequel l'unité de commande (1) est conçue pour déterminer qu e le support d'enregistrement d'informations est protégé contre l'écriture dans le cas où les informations de compatibilité et/ou les informations de trou d'inhibition d'écriture sur la cartouche dans laquelle est contenu le support d'enregistrement d'informations indiquent que l'enregistrement de données su r le support d'enregistrement d'informations est interdit.

3. Support d'enregistrement d'informations selon la revendication 1, dans lequel chacune de la pluralité de zones du support d'enregistrement d'informations est en outre protégée contre l'écriture sur la base d'un autre moyen de protection contre l'écriture prévu sur le support d'enregistrement d'informations.

4. Appareil d'enregistrement et/ou de reproduction selon la revendication 2, dans lequel l'unité de commande (1) détermine en outre que chacune de la pluralité de zones du support d'enregistrement d'informations est protégée contre l'écriture, sur la base d'un autre moyen de protection contre l'écriture prévu sur le support d'enregistrement d'informations.

5. Procédé d'enregistrement et/ou de reproduction de données relativement à un support d'enregistrement d'informations contenu dans une cartouche et réalisé conformément à une seconde norme de disque, la seconde norme de disque étant différente d'une première norme de disque, le support étant **caractérisé en ce qu'**il comprend une zone d'informations de compatibilité (113) destinée à stocker des informations de compatibilité (500, 600) qui spécifient, pour chacune d'une pluralité de zones sur le support d'enregistrement d'informations, si la zone respective est enregistrable et/ou reproductible conformément à la première norme de disque, dans lequel les informations de compatibilité (500, 600) sont des informations utilisables par un premier lecteur configuré conformément à la première norme de disque de telle façon que le premier lecteur, lorsqu' il utilise lesdites informations de compatibilité, ait l'autorisation d'enregistrer et/ou de reproduire des données conformément à la première norme de disque sur/à partir du support d'enregistrement d'informations réalisé conformément à la seconde norme de disque ; et
le procédé étant **caractérisé par le fait qu'**il consiste à :
lire les informations de compatibilité à partir de la zone d'informations de compatibilité du support d'enregistrement d'informations ; et
déterminer que chacune de la pluralité de zones du support d'enregistrement d'informations est protégée contre l'écriture dans le cas où les informations de compatibilité et/ou le s informations de trous d'inhibition d'écriture sur la cartouche dans laquelle est contenu le support d'enregistrement d'informations indiquent que l'enregistrement de données sur le support d'enregistrement d'informations est interdit.

6. Procédé d'enregistrement et/ou de reproduction selon la revendication 5, dans lequel chacune de la pluralité de zones du support d'enregistrement d'informations est en outre protégée contre l'écriture, sur la base d'un autre moyen de protection contre l'écriture prévu su r le support d'enregistrement d'informations.
